# EUROPÄISCHE PATENTSCHRIFT

(11) **EP 0 827 574 B1**
(45) Veröffentlichungstag und Bekanntmachung des Hinweises auf die Patenterteilung: **07.11.2001**
(21) Anmeldenummer: 97908158.5
(22) Anmeldetag: 01.03.1997
(51) Int. Cl.: F16D 65/12, B60B 17/00

(54) **SCHIENENRAD, INSBESONDERE GUMMIGEFEDERTES SCHIENENRAD**
RAIL WHEEL, ESPECIALLY A RESILIENT WHEEL
ROUE POUR VEHICULE SUR RAIL, EN PARTICULIER ROUE ELASTIQUE

(30) Priorität: 06.03.1996 DE 29604157 U
(43) Veröffentlichungstag der Anmeldung: 11.03.1998
(73) Patentinhaber: Knorr-Bremse MRP Systeme für Schienenfahrzeuge GmbH & Co. KG, 30453 Hannover (DE)
(72) Erfinder: DELLMANN, Torsten, D-50737 Köln (DE); LEHMANN, Wolfgang, D-42859 Remscheid (DE); RUPPERT, Helmut, D-42857 Remscheid (DE); GRONEMANN, Manfred, D-42855 Remscheid (DE); GERLACH, Thomas, D-47506 Neukirchen-Vluyn (DE); THIEMANN, Andrea, D-46145 Oberhausen (DE); HESSELMANN, Wolfgang, D-46149 Oberhausen (DE)
(86) Internationale Anmeldenummer: EP9701032
(87) Internationale Veröffentlichungsnummer: WO9733100

(56) Entgegenhaltungen:
- EP-A- 0 735 293
- DE-A- 2 306 164
- DE-A- 2 341 008
- DE-A- 3 240 636
- DE-A- 4 143 067
- DE-B- 1 044 857
- GB-A- 1 105 370

## Beschreibung

Die Erfindung betrifft ein Schienenrad, insbesondere gummigefedertes Schienenrad mit zwischen Radscheibe und Radreifen angeordnetem Gummielementen, an dessen Radscheibe zumindest einseitig eine ringförmige Bremsscheibe über zugeordnete Auflageflächen abgestützt und mit sich durch die Radscheibe erstreckenden Befestigungselementen befestigt ist und bei dem zwischen den einander zugeordneten Auflageflächen einerseits der Bremsscheibe und andererseits der Radscheibe ein Element aus einem wärmeisolierenden Material angeordnet ist.

Derartige Schienenräder sind in verschiedenen Ausführungen bekannt. Bei einem gattungsgemäßen Schienenrad (DE 32 40 636 A1) sind beidseits der Radscheibe Bremsscheiben mit Hilfe von Dehnschrauben befestigt, deren Dehnabschnitt mit geringerem Durchmesser in eine durchgehende Bohrung der Radscheibe eingesetzt ist. Die Auflageflächen einer der Bremsscheiben sind unmittelbar auf zugeordneten Auflageflächen der Radscheibe abgestützt. Zwischen den Auflageflächen der anderen Bremsscheibe und den zugeordneten Auflageflächen der Radscheibe sind Gleitsteine angeordnet. Damit soll unter anderen auch erreicht werden, dass die Gummielemente von der beim Abbremsen des Schienenrades entstehenden Bremswärme nicht angegriffen werden. Wegen der metallischen Kontakte der Auflagefläche zwischen Bremsscheiben einerseits und Radscheibe andererseits kann aber eine Erwärmung der Radscheibe und damit auch der Gummielemente zwischen Radscheibe und Radreifen kaum vermieden werden.

Ähnliches gilt auch für eine andere Ausführung ( DE 41 43 067 A1), bei der die Gummielemente zwischen Radscheibe und Radreifen mit Hilfe eines Klemmrings gehalten sind, wobei eine Bremsscheibe nur auf einer Seite der Radscheibe angeordnet ist und die Dehnschrauben, mit denen die Bremsscheibe gehalten ist, sich durch Öffnungen des Klemmringes erstrecken sowie in eine Gewindebohrung der Radscheibe eingedreht sind. Die Dehnschrauben erstrecken sich dabei durch eine wärmeisolierende Buxe.

Aufgabe der Erfindung ist es, ein Schienenrad bereitzuste en, bei dem die Radscheibe und die ggf. vorhandene Gummielemente wirksamer vor einer ungewünschten Erwärmung beim Abbremsen des Schienenrades geschützt werden. Diese Aufgabe wird dadurch gelöst, dass das scheibenförmige Element als Ringscheibe ausgebildet ist, die sich zwischen allen Auflageflächen erstreckt. Ein metallischer Kontakt zwischen den einander zugeordneten Auflageflächen wird damit vermieden und dementsprechend der Wärmefluss über die Auflageflächen ganz wesentlich reduziert, so dass im Ergebnis die Radscheibe und ggf. auch die Gummielemente zwischen der Radscheibe und dem Radreifen vor unerwünschter Erwärmung und insbesondere auch Überhitzung, geschützt werden. Insbesondere können die Bremsscheiben radscheibenseitig Kühlrippen aufweisen, weil dann die Kühlrippen sich zwischen benachbarten Auflageflächen auf der Ringscheibe abstützen können. Das verbessert die Stabilität des Aggregates aus Radscheibe und Bremsscheibe insbesondere dann, wenn beim Abbremsen des Schienenrades die Bremsscheibe sich unter Wärmeeinwirkung verformt.

Bei Ausführungen des Schienenrades mit einem Gleitstein, der zumindest im Bereich eines Befestigungselementes zwischen den zugeordneten Auflageflächen von Bremsscheibe und Radscheibe angeordnet ist, kann die Ringscheibe entweder radscheibenseitig oder bremsscheibenseitig angeordnet sein.

Die Ringscheibe kann aus textilem Material mit mineralischen Fasern und/oder hochtemperaturbeständigen Kunststofffasern bestehen. Sie kann insgesamt auch aus schlecht wärmeleitendem Kunststoff, aus Keramik oder im wesentlichen aus Glimmer bestehen. Wesentlich ist es, dass das Material der Ringscheibe hinreichende wärmeisolierende Eigenschaften besitzt.

Auch für die Anordnung der Ringscheibe bestehen verschiedene Möglichkeiten. So kann die Ringscheibe auf ihre zugeordnete Auflagefläche aufgeklebt sein. Es kann in zugeordnete Ausnehmungen eingelegt sein und auch als Oberflächenbeschichtung ausgebildet sein. Dementsprechend kann die Dicke der Ringscheibe abhängig von den Eigenschaften des Materials zwischen 0,1 und 40 mm liegen.

Im folgenden werden in der Zeichnung dargestellte Ausführungsbeispiele der Erfindung erläutert, es zeigen:
- Figur 1: schematisch und teilweise einen Radialschnitt durch ein Schienenrad und
- Figur 2: teilweise geschnitten eine Draufsicht auf das Schienenrad nach Figur 1.

Das in der Zeichnung dargestellte Schienenrad besteht in ihrem grundsätzlichen Aufbau aus einer Nabe 1, einer davon ausgehenden Radscheibe 2 mit äußerem Randscheibenkranz 3 und auf dem Radscheibenkranz 3 mit Hilfe von Gummielementen 4 verspannten Radreifen 5. Der Radscheibenkranz 3 weist einseitig eine Ausnehmung für einen keilförmigen, an den Gummielementen 4 angreifenden Klemmring 6 auf, der mit Hilfe von in den Radscheibenkranz 3 eindrehbaren Schrauben 7 gegen die Gummielemente 4 und damit gegen den Radreifen 5 verspannbar ist.

Beidseits der Radscheibe 2 sind ringförmige Bremsscheiben 8 angeordnet, die innenseitig Kühlrippen 9 aufweisen. Die Bremsscheiben 8 besitzen Auflageflächen 10, mit denen sie an zugeordneten Auflageflächen 11 der Radscheibe 2 abgestützt sind. Die Bremsscheiben 8 sind mit mehreren auf einem Teilkreis der Bremsscheiben 8 angeordneten Dehnschrauben 12 mit Muttern 20, die sich durch zugeordnete Bohrungen 13 der Radscheibe 2 erstrecken, gegeneinander und gegen die Radscheibe 2 verspannt.

Zwischen den Auflageflächen 10 der Bremsscheiben 8 und den Auflageflächen 11 der Radscheibe 2 sind wärmeisolierende Elemente in Form einer Ringscheibe 18 angeordnet.

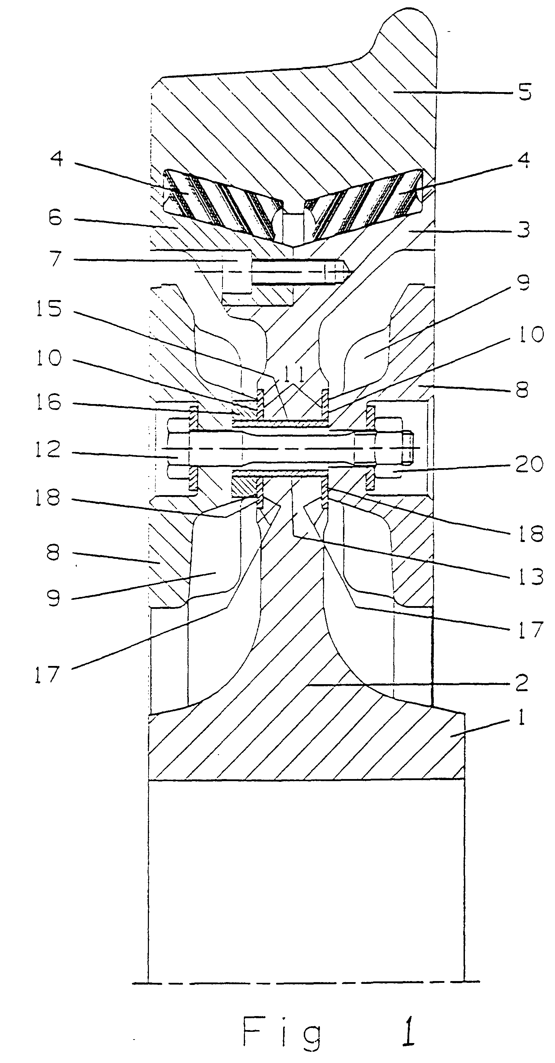

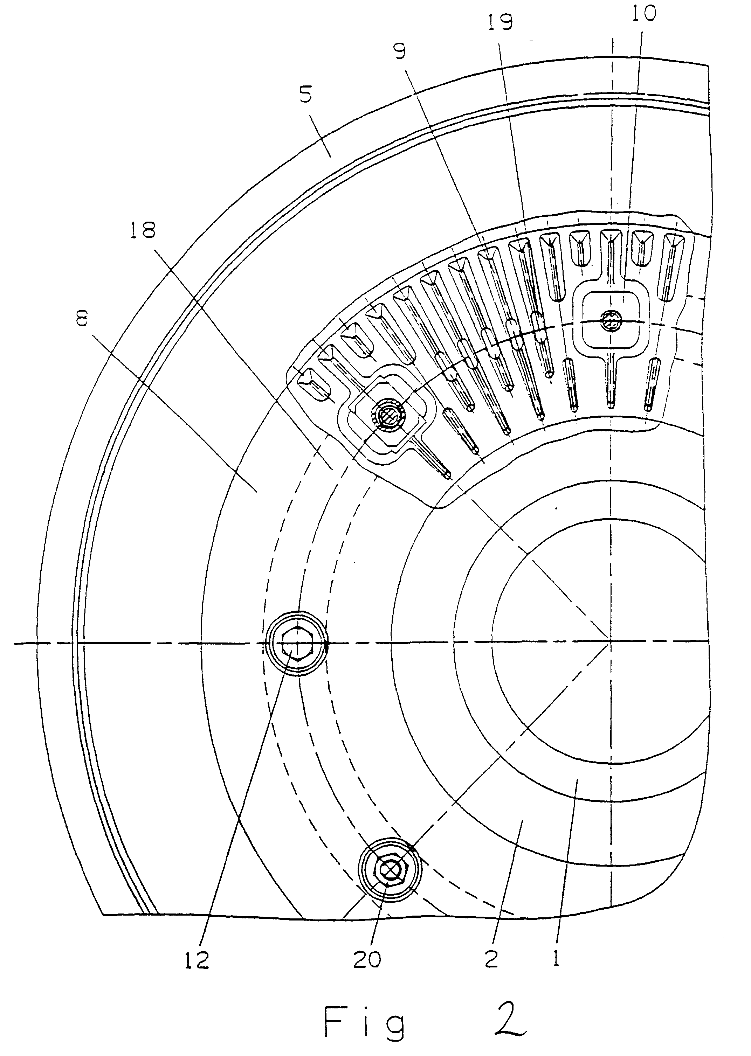

Bei der in den Figuren 1 und 2 gezeigten Ausführungsform weist die Radscheibe 2 beidseitig im Bereich der Bohrungen 13 jeweils eine umlaufende Ausnehmung 17 auf, in die das wärmeisolierende Element in Form einer Ringscheibe 18 eingesetzt ist. Es versteht sich, dass die Ringscheibe 18 zugeordnete Bohrungen für die Dehnschrauben 12 bzw. für die Dehnschrauben 12 umgebende Spannhülsen 15 aufweist.

Bei der dargestellten Ausführung ist die Anordnung so, dass die Spannhülse 15 sich bis in die zugeordnete Bohrung der Ringscheibe 18 erstreckt. Im übrigen weisen die Kühlrippen 9 im Bereich zwischen benachbarten Dehnschrauben 12 oder Gleitsteinen 16 Vorsprünge 19 auf, über die die Bremsscheiben 8 zusätzlich an ihren Ringscheiben 18 und damit an der Radscheibe 2 abgestützt sind.

Nicht dargestellt ist, dass die Ringscheiben 18 aus textilem Material mit mineralischen und/oder hochtemperaturbeständigen Kunststofffasern oder aus schlecht wärmeleitendem Kunststoff, aus Keramik oder im wesentlichen aus Glimmer bestehen können.

## Patentansprüche

1. Schienenrad, insbesondere gummigefedertes Schienenrad mit zwischen Radscheibe (2) und Radreifen (5) angeordneten Gummielementen (4), an dessen Radscheibe (2) zumindest einseitig eine ringförmige Bremsscheibe (8) über zugeordnete Auflageflächen (10, 11) abgestützt und mit sich durch die Radscheibe (2) erstreckenden Befestigungselementen (12, 20) befestigt ist und bei dem zwischen den einander zugeordneten Auflageflächen (10, 11) einerseits der Bremsscheibe (8) und andererseits der Radscheibe (2) ein Element aus einem wärmeisolierendem Material angeordnet ist,
**dadurch gekennzeichnet,**
**dass** es sich bei dem Element um eine Ringscheibe handelt, die sich zwischen allen Auflageflächen (10, 11) erstreckt.

2. Schienenrad nach Anspruch 1,
**dadurch gekennzeichnet,**
**dass** die Bremsscheiben (8) radscheibenseitig radikale Kühlrippen (9) aufweisen, die sich zwischen benachbarten Auflageflächen (10, 11) auf der Ringscheibe (18) abstützen.

3. Schienenrad nach Anspruch 1 oder 2,
**dadurch gekennzeichnet,**
**dass** zumindest im Bereich eines Befestigungselementes (12, 20) zwischen zugeordneten Auflageflächen (10, 11) von Bremsscheibe (8) und Radscheibe (2) ein Gleitstein (16) angeordnet ist und die Ringscheibe (18) radscheibenseitig angeordnet ist.

4. Schienenrad nach Anspruch 1 oder 2,
**dadurch gekennzeichnet,**
**dass** zumindest im Bereich eines Befestigungselementes (12, 20) zwischen zugeordneten Auflageflächen (10, 11) von Bremsscheibe (8) und Radscheibe (2) ein Gleitstein (16) angeordnet ist und die Ringscheibe (18) bremsscheibenseitig angeordnet ist.

5. Schienenrad nach einem der vorhergehenden Ansprüche,
**dadurch gekennzeichnet,**
**dass** die Ringscheibe (18) aus textilem Material mit mineralischen Fasern, textilem Material mit hochtemperaturbeständigen Kunststofffasern, schlecht wärmeleitenden Kunststoff, Keramik oder im wesentlichen aus Glimmer besteht.

## Claims

1. Rail wheel, especially a resilient rail wheel, including rubber elements (4) disposed between the wheel disc (2) and the wheel tyre (5), wherein, at least on one side, a ring-shaped brake disc (8) is supported via associated supporting surfaces (10, 11) on the wheel disc (2) thereof and fastened thereon by means of fastening elements (12, 20) passing through said wheel disc (2), and wherein an element consisting of a thermally insulating material is disposed between the mutually associated supporting surfaces (10, 11) of said brake disc (8), on the one hand, and of said wheel disc (2), on the other hand,
**characterised in that**
said element is a ring disc extending between all supporting surfaces (10, 11).

2. Rail wheel according to Claim 1,
**characterised in**
**that** said brake discs (8) comprise radical cooling fins (9) on the side of said wheel disc, which are supported between adjacent supporting surfaces (10, 11) on said ring disc (18).

3. Rail wheel according to Claim 1 or 2,
**characterised in**
**that** a slide element (16) is disposed at least in the region of a fastening element (12, 20) between associated supporting surfaces (10, 11) of said brake disc (8) and said wheel disc (2), and that said ring disc (18) is disposed on the side of said wheel disc.

4. Rail wheel according to Claim 1 or 2,
**characterised in**
**that** a slide element (16) is disposed at least in the region of a fastening element (12, 20) between associated supporting surfaces (10, 11) of said brake disc (8) and said wheel disc (2), and that said ring disc (18) is disposed on the side of said brake disc.

5. Rail wheel according to any of the preceding Claims,
**characterised in**
**that** said ring disc (18) is made of a textile material including mineral fibres, a textile material with synthetic resin fibres resistant to high temperatures, a synthetic material being a poor thermal conductor, a ceramic material or substantially of mica.

## Revendications

1. Roue pour rail, notamment roue pour rail élastique, qui comporte des éléments (4) en caoutchouc disposés entre le disque (2) de roue et le pneumatique (5) de roue, sur le disque (2) de roue de laquelle un disque (8) de frein annulaire prend appui au moins d'un côté par l'intermédiaire de surfaces (10, 11) de support associé et est fixé par des éléments (12, 20) de fixation s'étendant dans le disque (2) de roue et dans laquelle un élément en un matériau isolant à la chaleur est monté entre les surfaces (10, 11) de support associées l'une à l'autre d'une part du disque (8) de frein et d'autre part du disque (2) de roue,
**caractérisée**
**en ce que** l'élément est un disque annulaire qui s'étend entre toutes les surfaces (10, 11) de support.

2. Roue pour rail suivant la revendication 1, **caractérisée en ce que** les disques (8) de frein comportent des ailettes (9) de refroidissement radiales côté disque de roue, qui prennent appui entre des surfaces (10, 11) de support voisines sur le disque (18) annulaire.

3. Roue pour rail suivant la revendication 1 ou 2, **caractérisée en ce qu'**un coulisseau (16) est monté au moins dans la région d'un élément (12, 20) de fixation entre des surfaces (10, 11) de support associées du disque (8) de frein et du disque (2) de roue et **en ce que** le disque (18) annulaire est monté côté disque de roue.

4. Roue pour rail suivant la revendication 1 ou 2, **caractérisée en ce qu'**un coulisseau (16) est monté au moins dans la région d'un élément (12, 20) de fixation entre les surfaces (10, 11) de support associées du disque (8) de frein et disque (2) de roue et **en ce que** le disque (18) annulaire est monté côté disque de frein.

5. Roue pour rail suivant l'une des revendications précédentes,
**caractérisée en ce que** le disque (18) annulaire est en un matériau textile à fibres minérales, en un matériau textile à fibres en matière plastique résistant aux hautes températures, en une matière plastique mauvaise conductrice de la chaleur, en céramique ou essentiellement en mica.
